Europäisches Patentamt

(19) European Patent Office

Office européen des brevets

(11) Veröffentlichungsnummer: **0 294 415**
**B1**

(12) **EUROPÄISCHE PATENTSCHRIFT**

(45) Veröffentlichungstag der Patentschrift: **03.10.90**

(21) Anmeldenummer: **88900068.3**

(22) Anmeldetag: **10.12.87**

(86) Internationale Anmeldenummer:
**PCT/DE87/00588**

(87) Internationale Veröffentlichungsnummer:
**WO 88/04648 30.06.88 Gazette 88/14**

(51) Int. Cl.⁵: **C 04 B 11/26,** C 01 F 11/46 //
B01D53/34

(54) **VERFAHREN ZUR IN-SITU-GEWINNUNG VON CALCIUMSULFATHALBHYDRAT UND/ODER CALCIUMSULFAT (ANHYDRIT) AUS DEM WÄSCHER EINER NASSEN RAUCHGASENTSCHWEFELUNGSANLAGE.**

(30) Priorität: **18.12.86 DE 3643344**

(43) Veröffentlichungstag der Anmeldung:
**14.12.88 Patentblatt 88/50**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**DE-A-3 119 749**
**FR-A-2 374 942**
**GB-A-1 101 771**
**LU-A- 68 331**

(73) Patentinhaber: **GEBHARD, Georg, Dr.**
**Oberwehnrath**
**D-5226 Reichshof 1 (DE)**

(72) Erfinder: **GEBHARD, Georg, Dr.**
**Oberwehnrath**
**D-5226 Reichshof 1 (DE)**

(74) Vertreter: **Becker, Thomas, Dr. et al**
**Becker & Müller Patentanwälte**
**Eisenhüttenstrasse 2**
**D-4030 Ratingen 1 (DE)**

## Beschreibung

Die Erfindung betrifft ein Verfahren zur in-situ-Gewinnung von Calciumsulfathalbhydrat ($CaSO_4 \cdot 1/2\ H_2O$) und/oder Calciumsulfat ($CaSO_4$) (Anhydrit) aus dem Wäscher einer nassen Rauchgasentschwefelungsanlage.

Die Entschwefelung von Rauchgasen aus öl- oder kohlegefeuerten Kesseln mittels sogenannter nasser Entschwefelungsverfahren auf der Basis insbesondere calciumreicher Absorptionsmittel ist seit langem bekannt und stellt eine wichtige Maßnahme zur Minderung der $SO_2$-Belastung der Luft dar.

Nach der Verordnung über Großfeuerungsanlagen aufgrund des Bundesimmisionsschutzgesetzes müssen bis 1. Januar 1988 neue Kraftwerke mit Entschwefelungsanlagen ausgerüstet und alte Anlagen entsprechend nachgerüstet sein.

Als Endprodukt derartiger Rauchgasentschwefelungsanlagen fällt in erster Linie Calciumsulfatdihydrat (Gips), teilweise zusammen mit Calciumsulfit an. Da das abgezogene Calciumsulfatdihydrat selbst nicht abbindefähig ist, ist es erforderlich, zur weiteren Verarbeitung den sogenannten REA-Gips zu dehydratisieren. Dies geschieht im Stand der Technik durch eine anschließende Autoklav- und/oder thermische Behandlung des Gipses, wobei — je nach Verfahrensführung — Alpha-Halbhydrat, Beta-Halbhydrat oder Anhydrit gewonnen wird.

Nachteilig dabei ist, daß auf jeden Fall ein zusätzlicher apparativer Aufwand sowie zusätzliche Energien notwendig sind.

Der Erfindung liegt insoweit die Aufgabe zugrunde, ein Rauchgasentschwefelungsverfahren anzubieten, bei dem eine in-situ-Gewinnung der gewünschten Dehydratationsprodukte des Gipses, insbesondere von Calciumsulfathalbhydrat und Anhydrit ermöglicht wird. In-situ-Gewinnung bedeutet dabei, daß möglichst unmittelbar aus dem Wäscher einer nassen Rauchgasentschwefelungsanlage diese Dehydratationsprodukte abgezogen werden können, und damit eine Autoklav- oder thermisch Nachbehandlung entfällt.

Der Erfindung liegt die Erkenntnis zugrunde, daß eine in-situ-Gewinnung von Calciumsulfathalbhydrat und/oder möglich wird, wenn der Eindickungsgrad der Waschsuspension auf bestimmte, gegenüber dem Stand der Technik erhöhte Mindestwerte eingestellt wird.

Der Eindickungsgrad wird erfindungsgemäß ausgedrückt durch das Verhältnis der Chlorid-Konzentration der wässrigen Phase der Waschsuspension in mg/m³ zur Chlorid-Konzentration des aufgegebenen Rauchgases in mg/m³. Dabei stellt die Chloridkonzentration nur eine besonders leicht meßbare Bezugsgröße dar, die bei Bedarf auch durch andere Bezugsgrößen ersetzt werden kann. Neben der Aufkonzentration der Chloride führt nämlich auch eine Aufkonzentration anderer, in der Waschsuspension enthaltener Salze zu der gewünschten in-situ-Gewinnung der verschiedenen Calciumsulfatprodukte. Beispielhaft seien hier Calcium-, Natrium- oder Magnesiumfluoride, -bromide, -jodide oder die verschiedenen in der Waschsuspension enthaltenen Nitrite und Nitrate genannt. Dabei hat die Erfindung überraschenderweise festgestellt, daß alle diese Salze den Umwandlungspunkt für die Bildung von Calciumsulfathalbhydrat und/oder Calciumsulfat (Anhydrit) herabsetzen und diese Produkte gleichzeitig stabilisieren, wenn ein bestimmter Eindickungsgrad eingestellt wird.

Gemäß Anspruch 1 ist das Verfahren zur in-situ-Gewinnung von Calciumsulfathalbhydrat und/oder Calciumsulfat (Anhydrit) aus dem Wäscher einer nassen Rauchgasentschwefelungsanlage unter Einsatz eines calcium- und gegebenenfalls magnesiumreichen Absorptionsmittels dadurch beschrieben, daß die Waschsuspension auf eine Eindickung (Verhältnis der Chlorid-Konzentration der wässrigen Phase der Waschsuspension in mg/m³ zur Chlorid-Konzentration des aufgegebenen Rauchgases in mg/m³) von mindestens 1.000, vorzugsweise mindestens 10.000 eingestellt wird. Dieser Eindickungsgrad kann auch Werte von 100.000 und mehr erreichen, je nach Rahmenbedingungen (Chloridkonzentration des Rauchgases, Chloridkonzentration in der Waschsuspension). Gegebenenfalls erfolgt die Eindickung auch in einem dem Hauptwäscher nachgeschalteten Suspensionskreislauf. Ebenso können die Salze (zum Beispiel Chloride) auch gezielt separat der Suspension zugegeben werden.

Aus der DE—OS 31 19 749 ist ein Verfahren zur Herstellung von Calciumsulfathalbhydrat aus Rauchgasen von Feuerungen, insbesondere von Steinkohlekraftwerken bekannt, bei dem das Rauchgas zumindest teilweise entstaubt und mit einer calciumhaltigen Waschflüssigkeit gewaschen wird. Die aus dem Rauchgaswäscher austretende und Calciumsulfit enthaltende Waschflüssigkeit wird anschließend in einem Oxidationsbehälter zu Calciumsulfatdihydrat aufoxidiert. Das Dihydrat wird dann in der Suspension in einer Eindicker eingeleitet. Anschließend erfolgt die Einbringung in einen Autoklaven zur Dehydratation des Gipses zu Alpha-Calciumsulfathalbhydrat. Dem Autoklaven ist eine mechanische Entwässerung, zum Beispiel ein Vakuumfilter und diesem eine thermische Trocknung, zum Beispiel ein Flugstromtrockner nachgeschaltet (Seite 4, 2.—4. Absatz). Dieser Stand der Technik geht danach nicht über die eingangs genannten bekannten Rauchgasentschwefelungsverfahren hinaus, da auch hier wieder in einer separaten Stufe (Autoklaven) nach dem Wäscher eine Dehydratation erfolgt, die durch das erfindungsgemäß in-situ-Verfahren entbehrlich wird.

Wie bereits eingangs ausgeführt, soll erfindungsgemäß der Wäscher mit einer hohen Konzentration an gelösten und suspendierten Bestandteilen gefahren werden. Der gewünschte Eindickungsgrad wird dabei vorzugsweise durch eine Rezirkulation der Waschsuspension im Wäscher eingestellt, wobei jeweils eine Teilmenge der Waschsuspension dem Wäscher entnommen und außerhalb des Wäschers die wässrige Phase der Waschsuspension von den Feststoffteilen getrennt und die wässrige Phase anschließend wieder in den Wäscher zurückgeführt wird. Durch diesen Kreislauf wird die Chlorid- oder ganz allgemein Salzkonzentration in der Waschsuspension bis auf die genannten Werte erhöht, bei Erreichen der genannten Eindickungsgrade findet dann bereits in der Waschsuspension eine Umwandlung des Calciumsulfatdihydrates zu Calciumsulfathalbhydrat beziehungsweise Calciumsulfat (Anhydrit) während des eigentlichen Entschwefelungsprozesses statt. Die Bildung von Halbhydrat beziehungsweise Anhydrit kann gegebenenfalls auch durch externe Zugabe entsprechender Kristallisationskeime eingeleitet oder unterstützt werden.

Das Halbhydrat beziehungsweise der Anhydrit fallen dabei als Kristalle aus der Lösung aus und können anschließend auf bekannte Art und Weise, zum Beispiel mit Hilfe eines Zyklons oder eines Band- oder Trommelfilters von der wässrigen Phase der Waschsuspension getrennt werden. Eine anschließende Autoklavbehandlung oder thermische Nachbearbeitung entfällt.

Die optimale Verfahrensführung richtet sich nach den Bestandteilen des Absorptionsmittels und der Rauchgase.

Als Absorptionsmittel wird erfindungsgemäß vorzugsweise Kalkstein ($CaCO_3$) oder Kalk in Form von Calciumoxid (CaO) oder Calciumhydroxid ($Ca(OH)_2$) vorgeschlagen. Ebenso eignen sich aber auch Dolomit ($CaCO_3 \cdot MgCO_3$) beziehungsweise dessen Oxide oder Hydroxide als Absorptionsmittel, wobei der Eindickungsgrad hier auch so gefahren werden kann, daß er eher an der unter Grenze der genannten Bereiche liegt. Ebenso werden aber auch hier Eindickungsgrade von 1.000 oder höher eingestellt. Das Verfahren wird im üblichen Temperaturbereich eines Wäschers zwischen 45 und 75°C durchgeführt.

Bei hohen Chloridgehalten der Rauchgase, die den Eindickungsgrad der Entschwefelungsanlage zu höheren Chloridgehalten der Suspension begrenzen würden, schlägt die Erfindung in einer vorteilhaften Ausführungform vor, dem Wäscher einen an sich bekannten Vorwäscher vorzuschalten, damit die für die Bildung von Calciumsulfathalbhydrat und Calciumsulfat wesentlichen Bestandteile der Suspension ausreichend aufkonzentriert werden können.

Mit dem erfindungsgemäßen Verfahren wird es möglich, das Endprodukt der nassen Rauchgasentschwefung (Calciumsulfathalbhydrat, Anhydrit) direkt einer weiteren Verwendung zuzuführen, ohne daß aufwendige weitere Arbeiten zur Dehydratisierung des normalerweise bei der Entschwefelung anfallenden Gipses erforderlich wären.

Beispielhaft sind nachstehend noch einige typische Werte für die Durchführung des erfindungsgemäßen Verfahrens angegeben.

Der Gehalt an Chloridionen im Rauchgas aus öl- oder kohlegefeuerten Kesseln liegt, je nach eingesetztem Brennstoff, typischerweise zwischen 10 und 400 mg/m³. Wird durch Rezirkulation der Waschsuspension — wie beschrieben — die Konzentration an Chloridionen in der Waschsuspension auf beispielsweise 20 g/l entsprechend 20.000.000 mg/m³ aufkonzentriert, so ergeben sich Eindickungsgrade zwischen 2.000.000 und 50.000. Bei diesen Eindickungsgraden wird es in kürzester Zeit auf direktem Wege ermöglicht, Calciumsulfathalbhydrat beziehungweise Anhydrit über einen der abgezogenen Waschsuspension nachgeschalteten Filter abzutrennen. Die verbleibende wässrige Phase wird dann ganz oder teilweise zur Einstellung einer konstanten Chloridkonzentration in der Waschsuspension im Wascher wieder in diesen zurück- oder aber auch — sofern der Eindickungsgrad seinen gewünschten Wert stabilisiert hat — weggeführt.

## Patentansprüche

1. Verfahren zur in-situ-Gewinnung von Calciumsulfathalbhydrat und/oder Calciumsulfat (Anhydrit) aus dem Wäscher einer nassen Rauchgasentschwefelungsanlage unter Einsatz eines calcium- und gegebenenfalls magnesiumreichen Absorptionsmittels, wobei die Waschsuspension des Wäschers auf einen Eindickungsgrad, ausgedrückt durch das Verhältnis der Chlorid-Konzentration der wässrigen Phase der Waschsuspension in mg/m³ zur Chlorid-Konzentration des aufgegebenen Rauchgases in mg/m³ auf einen Wert von mindestens 1.000, vorzugsweise mindestens 10.000 eingestellt wird.

2. Verfahren nach Anspruch 1, dadurch gekennzeichnet, daß der gewünschte Eindickungsgrad durch eine Rezirkulation der Waschsuspension im Wäscher eingestellt wird, wobei jeweils eine Teilmenge der Waschsuspension dem Wäscher entnommen und außerhalb des Wäschers die wässrige Phase der Waschsuspension von den Feststoffen getrennt und die wässrige Phase anschließend wieder ganz oder teilweise in den Wäscher zurückgeführt wird.

3. Verfahren nach Anspruch 2, dadurch gekennzeichnet, daß nach Erreichen des gewünschten Eindickungsgrades die von den Feststoffen getrennte wässrige Phase nur noch zu einem geringen Teil in den Wäscher zurückgeführt und ansonsten abgeführt wird.

4. Verfahren nach einem der Ansprüche 1 bis 3, dadurch gekennzeichnet, daß die Trennung der festen von den flüssigen Bestandteilen der Waschsuspension mittels eines Zyklons, Band- oder Trommelfilters erfolgt.

5. Verfahren nach einem der Ansprüche 1 bis 4, dadurch gekennzeichnet, daß als Absorptionsmittel Kalkstein ($CaCO_3$) oder Kalk in Oxidform (CaO) oder Hydroxidform ($Ca(OH)_2$) verwendet wird.

6. Verfahren nach einem der Ansprüche 1 bis 4, dadurch gekennzeichnet, daß als Absorptionsmittel Dolomit ($CaCO_3 \cdot MgCO_3$) verwendet wird.

7. Verfahren nach einem der Ansprüche 1 bis 6, dadurch gekennzeichnet, daß insbesondere bei hohen Chloridgehalten des Rauchgases diese vor der Einleitung in den Wäscher in einem Vorwäscher bekannter Bauart behandelt und erst anschließend in den Hauptwäscher geleitet werden.

8. Verfahren nach einem der Ansprüche 1 bis 7, dadurch gekennzeichnet, daß der Waschsuspension Kristallisationskeime zur Bildung von Calciumsulfathalbhydrat und/oder Anhydrit, insbesondere Kristalle dieser Mineralphasen, separat zugegeben werden.

**Revendications**

1. Procédé de récupération in-situ de sulfate de calcium semi hydraté et/ou de sulfate de calcium anhydre provenant du laveur d'une usine de désulfuration par voie humide des gaz de combustion utilisant un absorbant riche en calcium et éventuellement en magnésium, selon lequel le degré d'épaississement de la suspension de lavage du laveur, exprimé par le rapport de la concentration en chlorure de la phase aqueuse de la suspension de lavage, en mg/m³ à la concentration en chlorure des gaz de combustion amenés en mg/m³, est fixé à au moins 1000 et de préférence à au moins 10000.

2. Procédé selon la revendication 1, caractérisé en ce que le degré d'épaississement souhaité est obtenu par la mise en recirculation de la suspension de lavage dans le laveur au cours de laquelle, à chaque fois, une partie de la suspension de lavage du laveur est prélevée, et hors du laveur, la phase aqueuse de la suspension de lavage est extraite des déchets solides et la phase aqueuse est ensuite totalement ou partiellement reconduite dans le laveur.

3. Procédé selon la revendication 2, caractérisé en ce que, après l'obtention du degré d'épaississement souhaité, la phase aqueuse extraite des déchets solides est reconduite seulement pour une faible partie et sinon évacuée.

4. Procédé selon l'une des revendications 1 à 3, caractérisé en ce que l'extraction des solides à partir de la partie liquide de la suspension de lavage est réalisée au moyen d'un séparateur à cyclone, d'un filtre à bande ou d'un filtre à tambour.

5. Procédé selon l'une des revendications 1 à 4, caractérisé en ce que, en tant qu'absorbant, on utilise du calcaire (CaCO₃) ou de la chaux sous forme oxydée (CaO) ou sous forme hydroxylée (Ca(OH)₂).

6. Procédé selon l'une des revendications 1 à 4, caractérisé en ce que, en tant qu'absorbant, on utilise de la dolomite (CaCO₃·MgCO₃).

7. Procédé selon l'une des revendications 1 à 6, caractérisé en ce que, particulièrement pour des teneurs en chlorure élevées des gaz de combustion, ces derniers, en vue de leur introduction dans le laveur, sont traités dans un prélaveur de genre connu et ensuite conduits dans la laveur principal.

8. Procédé selon l'une des revendications 1 à 7, caractérisé en ce que des germes de cristallisation de la suspension de lavage et en particulier des cristaux de la phase minérale sont ajoutés séparément, pour la formation de sulfate de calcium semi hydraté et/ou anhydre.

**Claims**

1. Process for in-situ extraction of Calciumsulfate-hemihydrate and/or Calciumsulfate (anhydrite) from the rinsing apparatus of a wet desulfurisation plant by using an absorbent material rich in calcium or magnesium respectively, whereby the wash suspension of the rinsing apparatus is adjusted at a thickening value of at least 1000, preferably at least 10.000, being defined by the ratio of the chloride-concentration of the aqueous phase of the wash suspension in mg/m³ to the chloride-concentration of the introduced flue gas in mg/m³.

2. Process according to claim 1, characterized in that the desired thickening degree is achieved by a recirculation of the wash suspension in the rinsing apparatus, whereby the wash suspension is drawn off partially from the rinsing apparatus and the aqueous phase of said wash suspension is separated from the solid particles before the aqueous phase is returned in said rinsing apparatus completely or partially.

3. Process according to claim 2, characterized in that the aqueous phase, separated from solid particles is returned only in a very little part in the rinsing apparatus while the rest is guided away, when the desired thickening degree has been reached.

4. Process according to one of claims 1 to 3, characterized in that the solid and aqueous parts of said wash suspension are separated by a cyclone, band- or drum filter.

5. Process according to one of claims 1 to 4, characterized in that limestone (CaCO₃) or lime as an oxide (CaO) or hydroxide (Ca(OH)₂) is used as an absorbent material.

6. Process according to one of claims 1 to 4, characterized in that dolomite (CaCO₃·MgCO₃) is used as an absorbent.

7. Process according to one of claims 1 to 6, characterized in that mainly at high chloride rates of the flue gas, these flue gases are treated in a prewasher of known design before being introduced in the rinsing apparatus.

8. Process according to one of claims 1 to 7, characterized in that germs of crystallization are added to the wash suspension to initiate formation of calciumsulfatehemi-hydrate and/or anhydrite, especially cristals of the mineral-phases.